**Europäisches Patentamt**

**European Patent Office**

**Office européen des brevets**

(19)

(11) Veröffentlichungsnummer: **0 156 991**
**A1**

(12) **EUROPÄISCHE PATENTANMELDUNG**

(21) Anmeldenummer: **84115823.1**

(22) Anmeldetag: **19.12.84**

(51) Int. Cl.⁴: **G 01 B 11/14**

(30) Priorität: **13.02.84 CH 674/84**

(43) Veröffentlichungstag der Anmeldung: **09.10.85**
**Patentblatt 85/41**

(84) Benannte Vertragsstaaten: **AT BE DE FR GB IT LU NL SE**

(71) Anmelder: **Jenzer AG für Messtechnik, Lerzenstrasse 27, CH-8953 Dietikon (CH)**

(72) Erfinder: **Neukomm, Peter Dr.sc.techn., Damianstrasse 5, CH-5430 Wettingen (CH)**
Erfinder: **Augustin, Viktor, Im Aemmet 7, CH-8964 Friedlisberg (CH)**

(74) Vertreter: **Morva, Tibor, Morva Patentdienste Hintere Vorstadt 34, CH-5001 Aarau (CH)**

(54) **Optisches Messgerät zur berührungslosen Abstandsmessung.**

(57) Das optische Meßgerät sendet einen kohärenten Lichtbündel (2) senkrecht auf die Oberfläche (3) eines Objektes aus. Das durch den Lichtbündel (2) erzeugte Streulicht (6) wird durch eine optische Einrichtung (7) auf einen ortsfesten streifenförmigen Linearsensor (5) geleitet. Der Linearsensor (5) ist in einem in der Betriebsstellung sich drehenden Hohlzylinder (8) angeordnet. Der Hohlzylinder (8) weist mehrere den streifenförmigen Linearsensor (5) unter einem spitzen Winkel (10) kreuzende Schlitze (9) auf. Die am Linearsensor (5) angeschlossene Auswerteschaltanordnung (12) erzeugt höchstens während der Kreuzung der Schnittstelle zwischen einem Schlitz (9) und der die größte gemessene, eine bestimmte Grenze überschreitende Lichtintensität aufweisenden Stelle des Linearsensors (5) Meßsignale. Mit dem Meßgerät können Distanzmessungen bei einem hohen Auflösevermögen durchgeführt werden.

## Optisches Messgerät zur berührungslosen Abstandsmessung

Die vorliegende Erfindung betrifft ein optisches Messgerät zur berührungslosen Abstandsmessung zwischen dem Messgerät und einem Gegenstand mit einer einen kohärenten Lichtbündel senkrecht auf die Oberfläche des Objektes ausstrahlenden Lichtquelle, mit mindestens einem im Messgerät befestigten, das vom innerhalb des Messbereiches des Messgerätes liegenden Objekt reflektierte Streulicht empfangenden Lichtsensorelement und mit einer am Ausgang des Lichtsensorelementes angeschlossenen elektronischen Auswerteschaltanordnung, wobei die Lage des über eine optische Einrichtung empfangenen Streulichts auf dem Lichtsensorelement das Mass für den zu messenden Abstand bildet.

Aus der US-PS 3.723.003 ist ein optisches Messgerät der eingangs erwähnten Art bekannt. Bei dieser Anordnung besteht das Lichtsensorelement aus mehreren aneinandergereihten Photodioden. Die Auflösung dieses Gerätes ist durch die Breite der Photodioden beschränkt. Dieses Messgerät eignet sich nicht für Messungen höchster Präzision.

Aus der DE-OS 3.009.534 ist ein optisches Messgerät mit einer Lichtquelle, mit zwei jeweils eine Mehrzahl von Einzelsensoren aufweisenden Lichtsensorelementen und mit zwei optischen Einrichtungen, die jeweils Ausschnitte zweier von dem zu messenden Gegenstand getrennt erhaltener Abbildungen auf die Lichtsensorelemente projizieren, bekannt. Bei dieser Anordnung besteht auch der Nachteil, dass die Auflösung durch die Breite der Einzelsensoren beschränkt ist.

Bei dem aus der DE-PS 2.401.618 bekannten Laser-Dimensionskomparator richtet eine Laser-Lichtquelle kohärentes Licht senkrecht auf die Oberfläche eines zu messenden Werkstücks, um auf diesem einen Laser-Intensitätsgradienten zu erzeugen. Einem Photodetektor ist eine optische Einrichtung derart zugeordnet, dass ein Paar von einen Abstand zueinander aufweisenden und vom Werkstück reflektierten Bilder des auf dem Werkstück erzeugten Laserlicht-Intensitätsgradienten auf der Fläche des Photodetektors abgebildet wird. Bei der Abtastung der Photodetektorfläche werden zwei proportional dem Abstand der beiden Lichtfleck-Bildpunkte zeitlich voneinander getrennte Ausgangsimpulse erzeugt, welche von einem Masstaboszillator erzeugte Masstabimpulse einem Aufwärts/Abwärts-Zähler zuschalten. Eine logische Schaltung zählt die durchgeschalteten Masstabimpulse bezw. vergleicht sie mit einem Bezugswert. Bei dieser Anordnung beschränkt die Frequenz der Abtastung die Auflösung. Dieses Gerät weist ausserdem relativ grosse Abmessungen auf und ist mit wirtschaftlichen Nachteilen verbunden.

Aus der DE-PS 2.650.422 ist ein weiteres Abstandsmessgerät bekannt. Bei dieser Anordnung wird ein kohärenter Lichtstrahl in einem vorgegebenen Einfallswinkel auf die Messfläche gerichtet. Die von der Messfläche reflektierten Strahlen werden einem einen Lichtsensor enthaltenden Empfänger zugeführt, der den Reflexionswinkel zur Bestimmung des Abstandes auswertet. Vor dem Lichtsensor des Empfängers ist als ortsveränderlicher Messpalt eine auf einer rotierenden Scheibe angeordnete evolventenförmige Schlitzblende angeordnet. Die Schlitzblende läuft an einer fest angeordneten Spaltblende vorbei. Der Schnittpunkt zwischen der umlaufenden Schlitzblende und der ortsfesten Spaltblende definiert die Winkellage der umlaufenden Schlitzblende und dadurch bei Durchtritt eines von der Messfläche diffus reflektierten, von einem Objektiv erfassten Strahls den Winkel zwischen diesem Strahl und der Achse des optischen Systems und somit den fraglichen Abstand. Bei dieser Anordnung muss die Winkellage der umlaufenden Schlitzblende durch Abzählung einer Teilung am Rande der Scheibe bestimmt werden, wodurch der Auflösung dieses Gerätes auch Grenzen gesetzt sind. Um eine distanzabhängige optische Verzerrung zu verhindern, muss die rotierende Scheibe parallel zur Richtung des auf das Messobjekt auftreffenden Lichtstrahls angeordnet sein. Dies bedingt einen relativ kleinen Einfallswinkel des kohärenten Lichtstrahls auf die Messfläche. Bei einer solchen Anordnung treten erfahrungsgemäss Fehlreflexionen mit relativ hoher Intensität auf, die die Messung verfälschen. Die Empfängeranordnung ist hier so getroffen, dass sämtliche Fehlreflexionen von der Messfläche in den Lichtsensor gelangen und zur Messignalerzeugeung führen. Deshalb ist die Messunsicherheit relativ gross. Beim Lichtsensor kann man den Störeinflüssen durch Herabsetzung der Empfindlichkeit entgegenwirken. Da die Intensität des reflektierten Lichtstrahles vom Material der Messfläche abhängt, kann die Herabsetzung der Empfindlichkeit des Lichtsensors dazu führen, dass Messflächen an schwach reflektierenden Materialien nicht benutzt werden können, oder aufwendige Justagearbeiten erforderlich sind.

Die Aufgabe der vorliegenden Erfindung ist es, ein optisches Messgerät anzugeben, das ein hohes Auflösevermögen aufweist, die Störeinflüsse unwirksam macht und wirtschaftlich vorteilhaft ist.

Die gestellte Aufgabe ist dadurch gelöst, dass das Lichtsensorelement aus einem durch das reflektierte Streulicht innerhalb des Messbereiches bestreichbaren streifenförmigen Linearsensor besteht, dass ein in der Betriebsstellung sich drehender, mit mindestens einem den streifenförmigen Linearsensor unter einem spitzen Winkel kreuzenden Schlitz versehener Hohlzylinder den Linearsensor umhüllt und dass eine höchstens während der Kreuzung der Schnittstelle zwischen einem Schlitz und der die grösste gemessene, eine bestimmte Grenze überschreitende Lichtintensität aufweisenden Stelle des Linearsensors Messignale erzeugende und während der Kreuzung der übrigen Schnittstellen diese unterdrückende elektonische Auswerteschaltanordnung vorgesehen ist.

Der streifenförmige Linearsensor ist vorteilhafterweise parallel zur Achse des Hohlzylinders ausgerichtet.

Bevorzugt ist, dass der Schlitz den streifenförmigen Linearsensor unter 45° kreuzt.

Am Hohlzylinder können vier Schlitze vorgesehen sein. Der Hohlzylinder kann in der Betriebsstellung zwischen 5000 und 25000 Umdrehungen in der Minute aufweisen.

Das Verhältnis der durch das Streulicht bestreichbaren Breite des streifenförmigen Linearsensors zur Breite des Schlitzes im Hohlzylinder kann zwischen 0,1 und 4 liegen.

Die an den beiden Enden des Linearsensors angeschlossene elektronische Auswerteschaltanordnung kann eine für die an beiden Enden des Linearsensors austretenden Ströme bestimmte differenz- und summenbildende Schaltanordnung, eine nachgeschaltete die Stromdifferenzen durch die Stromsummen dividierende Divisionseinheit und eine Tastspeichereinheit enthalten, wobei eine zur Quadrierung der Stromsummen vorgesehene Quadriereinheit einen nachfolgenden die Ueberschreitung einer einer vorgegebenen Grenze der Lichtintensität entsprechenden Stromgrenze feststellenden und während dieser Grenzüberschreitung die Tastspeichereinheit zur Erzeugung von Messignalen aktivierenden Schwellwertdetektor steuert.

Am Hohlzylinder kann ein jeweils mindestens den Beginn der Kreuzung des Schlitzes mit dem Linearsensor feststellender Detektor vorgesehen sein.

Die elektronische Auswerteschaltanordnung kann einen mindestens zwei Betriebsarten aufweisenden steuerbaren elektronischen Schalter enthalten, durch den die Lichtquelle und/oder der Linearsensor derart ein- und ausschaltbar sind, dass in einer ersten Abtast-Betriebsart die Lichtquelle und der Linearsensor mindestens so lange eingeschaltet bleiben, bis mindestens ein Schlitz den Linearsensor gekreuzt hat und in einer nachfolgenden Mess-Betriebsart die Lichtquelle und der Linearsensor nur an jener Schnittstelle eingeschaltet sind, wo ein Schlitz die Stelle des Linearsensors mit der in der vorangegangenen Abtast-Betriebsart gemessenen grössten relativen Lichtintensität kreuzt, wobei bei der Kreuzung der übrigen Stellen die Lichtquelle und/oder der Linearsensor ausgeschaltet sind.

Zur Steuerung der Ein- und Ausschaltung des elektronischen Schalters kann in der Abtast-Betriebsart eine Verbindung zum Detektor vorhanden und in der Mess-Betriebsart dem Linearsensor eine Korrelator-Schaltanordnung und ein Schwellwertdetektor nachgeschaltet sein.

Bei einem optischen Messgerät mit einem Sensorelement kann der elektronische Schalter in der Abtast-Betriebsart während mindestens zwei Schlitze den Linearsensor kreuzen, eingeschaltet sein und die Einschaltung des elektronischen Schalters in der nachfolgenden Mess-Betriebsart nur an derjenigen Schnittstelle zwischen einem Schlitz und dem Linearsensor erfolgen, wo in der vorangegangenen Abtast-Betriebsart eine maximale Korrelation zwischen den gemessenen eine bestimmte Grenze überschreitenden Lichtintensitäten aufgetreten war.

Bei einem optischen Messgerät mit zwei Sensorelementen können die beiden Linearsensoren im Hohlzylinder 180° versetzt angeordnet sein. Bevorzugt erfolgt die Einschaltung des elektronischen Schalters in der Mess-Betriebsart nur an derjenigen Schnittstelle zwischen einem Schlitz und einem Linearsensor, wo in der vorangegangenen Abtast-Betriebsart eine maximale Korrelation zwischen den an den beiden Linearsensoren gemessenen ein bestimmte Grenze überschreitenden Lichtintensitäten aufgetreten war.

Im folgenden sind Ausführungsbeispiele der Erfindung anhand der Zeichnungen näher beschrieben. Es zeigen

Fig.1 eine schematische Darstellung eines optischen Messgerätes,

Fig.2 die Abwicklung eines mit vier Schlitzen versehenen Hohlzylinders und den zeitlichen Ablauf der Lichtintensität der Lichtquelle sowie der Messsignale,

Fig.3 das Blockschaltbild einer Auswerteschaltanordnung,

Fig.4 die Abwicklung eines mit vier Schlitzen versehenen Hohlzylinders und einen weiteren zeitlichen Ablauf der Lichtintensität der Lichtquelle sowie der Messignale und

Fig.5 das dazugehörende Blockschaltbild,

Fig.6 eine stark schematisierte Darstellung eines optischen Messgerätes mit zwei Lichtstrahlen und zwei Linearsensoren und

Fig.7 die dazugehörende Abwicklung des mit zwei Schlitzen versehenen Hohlzylinders und den zeitlichen Ablauf der Lichtintensität der Lichtquelle und der Messignale.

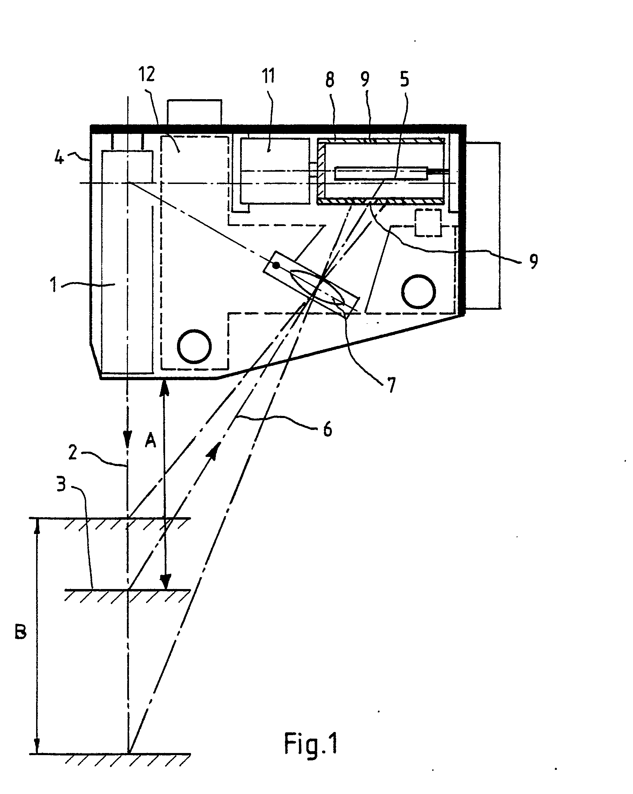

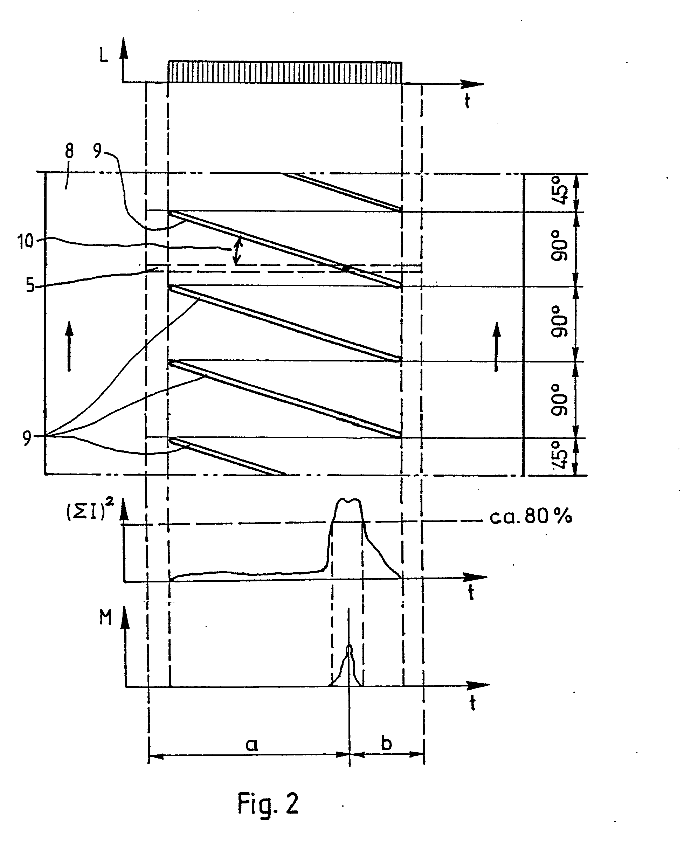

Das in Fig.1 schematisch dargestellte optische Messgerät enthält eine Laser-Lichtquelle 1, die einen kohärenten Lichtbündel 2 senkrecht auf die Oberfläche 3 eines Objektes ausstrahlt und einen im Gehäuse 4 ortsfesten streifenförmigen Linearsensor 5, der das vom Objekt reflektierte Streulicht 6 über eine optische Einrichtung 7 empfängt. Der Linearsensor 5 ist in einem in der Betriebsstellung sich drehenden Hohlzylinder 8 ortsfest angeordnet und achsparallel ausgerichtet. Im Hohlzylinder 8 sind vier den Linearsensor 5 unter einem spitzen Winkel 10 kreuzende Schlitze 9 ausgespart. In Fig.2 ist die Abwicklung dieses Hohlzylinders 8 mit den vier Schlitzen 9 dargestellt. Der Hohlzylinder 8 wird durch einen Motor 11 mit 20000 Umdrehungen in der Minute angetrieben. Bei dieser Umdrehungszahl in der Minute braucht ein Schlitz 9 nur 0,75 Millisekunden für die Kreuzung eines Linearsensors 5. In Fig.2 ist der Winkel 10 aus Platzgründen klein gezeichnet. Versuche haben gezeigt, dass bei einem Winkel 10 von 45° optimale Messergebnisse erzielbar sind.

Um das Messgerät benützen zu können, muss die Oberfläche 3 eines Objektes innerhalb des Messbereiches B liegen. Das Mass für den zu messenden Abstand A ist die Lage des empfangenen Streulichtes 6 auf dem Linearsensor, wie es in Fig.2 mit Abstand a bezeichnet ist. Es lässt sich bekannterweise mathematisch ableiten, dass der Abstand a zu $Ia-Ib/Ia+Ib$ proportional ist, wobei Ia den am "a"-Ende und Ib den am "b"-Ende des Linearsensors 5 abgegriffenen Strom bedeuten. Der den Linearsensor 5 kreuzende Schlitz 9 des Hohlzylinders 8 sichert, dass in jedem Zeitpunkt nur eine einzige Stelle des Linearsensors 5 für ein allfälliges Streulicht zugänglich ist. Für das Verhältnis der durch das Streulicht bestreichbaren Breite des streifenförmigen Linearsensors 5 zur Breite des Schlitzes 9 im Hohlzylinder 8 liegt vorteilhafterweise zwischen 0,1 und 4. In diesem Ausführungsbeispiel beträgt es etwa 1,5. Ohne die Anwendung des mit schrägen Schlitzen 9 versehenen drehenden Hohlzylinders 8 wäre eine Bestimmung des Abstandes a mit der grössten Lichtintensität zumindest nicht mit der erforderlichen Genauigkeit möglich, weil an ausserhalb des Abstandes a liegenden Stellen des Linearsensors 5 auftreffende Störlichter trotz kleinerer Intensität die Messung unverhältnismässig stark beeinflussen würden.

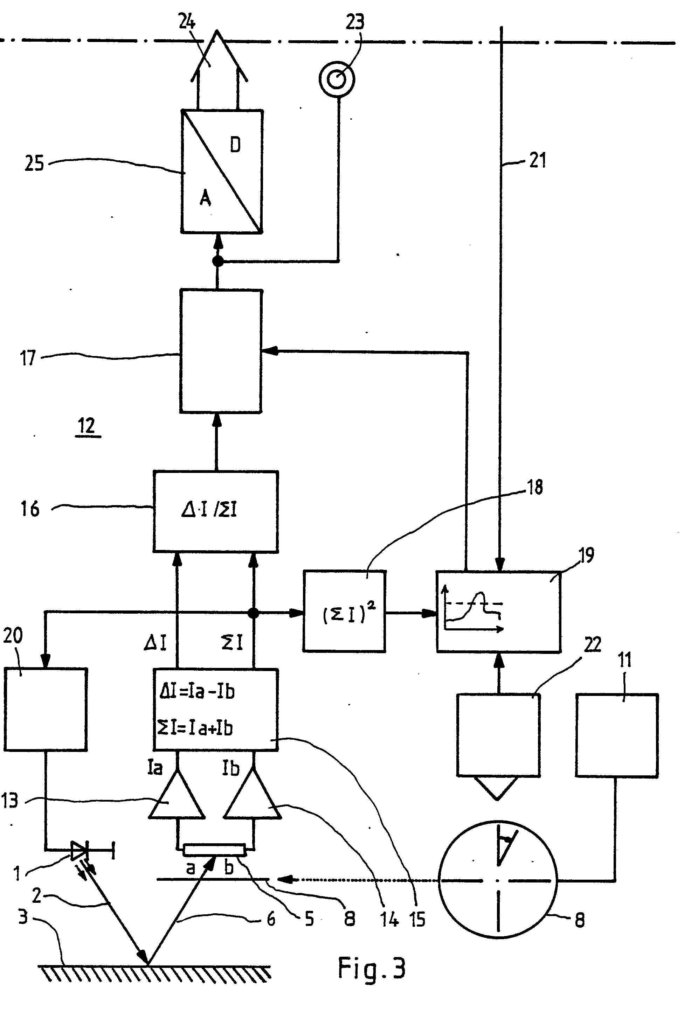

Die Laser-Lichtquelle 1 sendet ständig einen pulsmodulierten kohärenten Lichtbündel 2 senkrecht auf die Oberfläche 3 eines Objektes mit einer in Fig.2 angedeuteter Intensität L, wobei mit t die Zeit bezeichnet ist. In Fig.3 ist der Lichtbündel 2 nur rein schematisch schräg zur Oberfläche 3 gezeichnet. Das Streulicht 6 gelangt von der Oberfläche 3 nach Fig.3 durch einen im Hohlzylinder 8 angebrachten Schlitz 9 zum Linearsensor 5. Der Hohlzylinder 8 und der Motor 11 sind hier auch nur schematisch dargestellt. Die Laser-Lichtquelle 1 und der Linearsensor 5 sind an einer in Fig.3 in Form eines Blockschaltbildes dargestellten Auswerteschaltanordnung 12 angeschlossen. Die durch den Vorverstärker 13 und 14 von den "a"- und "b"-Enden des Linearsensors 5 geführten Ströme Ia und Ib werden einer differenz- und summenbildenden Schaltanordnung 15 zugeführt. Die Divisionseinheit 16 bestimmt aus dem Verhältnis $Ia-Ib/Ia+Ib$ ständig eine den Abständen a auf dem Linearsensor 5 entsprechende Grösse und gibt diese einer Tastspeichereinheit 17 weiter. Die Summe der Ströme Ia+Ib wird einer Quadriereinheit 18 auch zugeführt. Der quadrierte Summenstrom $(Ia+Ib)^2$ lässt im nachfolgenden Schwellwertdetektor 19 die über eine in Fig.2 mit 80% angenommene Grenze liegenden Stromwerte und somit die Schnittstelle zwischen einem Schlitz 9 und der Stelle mit den grössten Lichtintensitäten auf dem Linearsensor 5 erkennen. Sobald im Schwellwertdetektor 19 die Stromgrenze von 80% erreicht ist, wird ein Signal zu Tastspeichereinheit 17 geleitet, worauf dort die Erzeugung der Messignale M (Fig.2) beginnt. Die Messignale M werden nur so lange erzeugt, bis die Stromwerte im Schwellwertdetektor 19 über der auf 80% angesetzte Grenze liegen. Dadurch, dass nur in einem engen, die Stelle mit den grössten Lichtintensitäten auf dem Linearsensor 5 umfassenden Bereich Messwerte erzeugt werden, kann die genaue Stelle des Messwermaximums erkennt und das angestrebte hohe Auflösevermögen des Messgerätes erreicht werden. Der Summenstrom beeinflusst auch die Steuereinheit 20 der Laser-Lichtquelle 1, wo automatisch die richtige Lichtintensität eingestellt wird. Der Schwellwertdetektor 19 wird über eine Systemtaktleitung 21 und über einen am Hohlzylinder 8 abtastenden jeweils den Beginn der Kreuzung des Schlitzes 9 mit dem Linearsensor 5 feststellenden Detektor 22 gesteuert. Diese Steuerung erlaubt eine Synchronisation zwischen der Bewegung des Hohlzylinders 8 und den am Analogausgang 23 oder am Ausgang 24 des Analog-Digital-Wandlers 25 angeschlossenen weiteren Einheiten, z.B. einem nicht dargestellten Mikroprozessor.

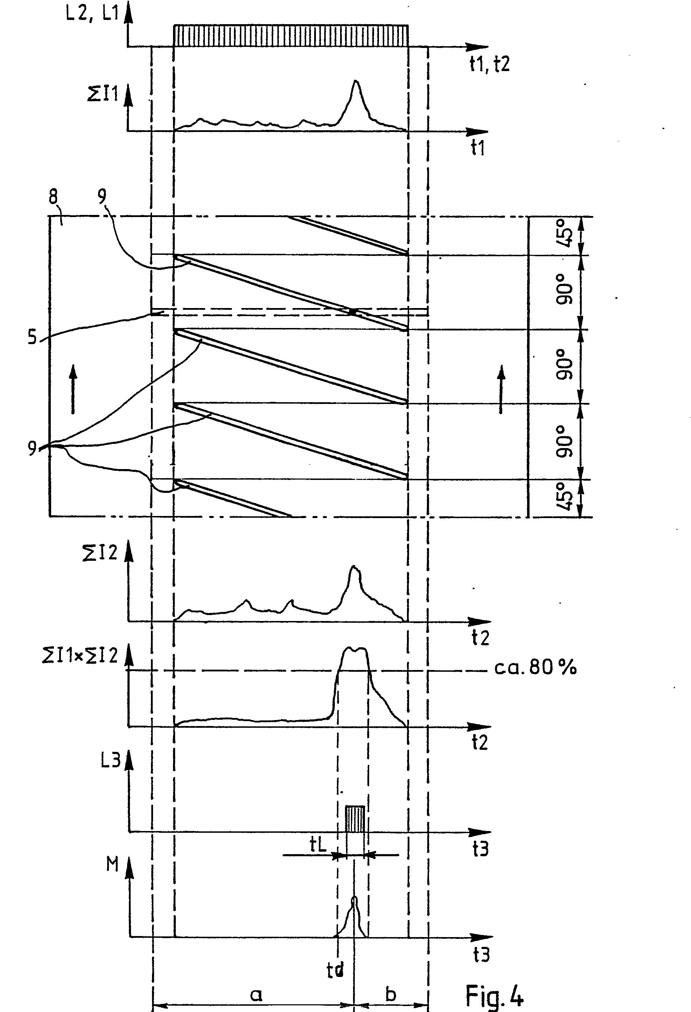

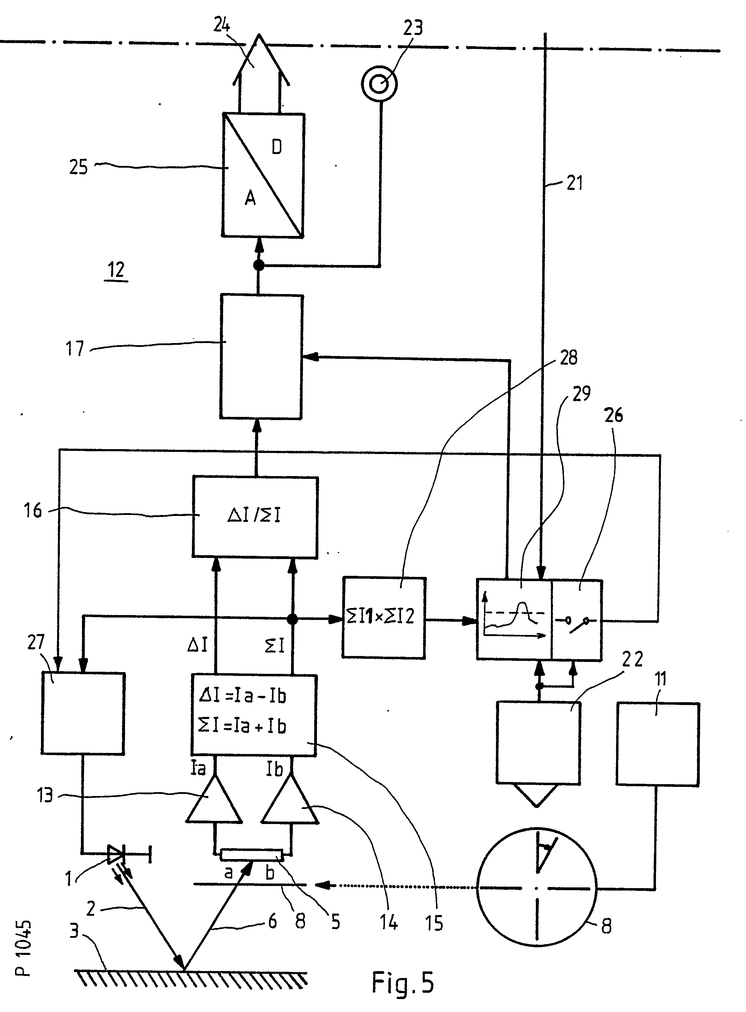

An Stelle der Quadrierung der während einer Durchkreuzung des Linearsensors 5 durch einen Schlitz 9 entstandenen Stromsummenwerte in der Quadriereinheit 18 können auch zwei aus zwei hintereinander durchgeführten Messungen stammende jeweils an der gleichen Stelle des Linearsensors 5 gewonnene Stromwerte miteinander multipliziert werden. Bei dieser Kreuzkorrelation können die nicht zur gleichen Zeit oder nicht an der gleichen Stelle des Linearsensors 5 auftretenden Störeinflüsse einfach eliminiert werden. Fig.4 zeigt den zeitlichen Ablauf und Fig.5 das dazugehörende Blockschaltbild. In Fig.5 sind die mit den in Fig.3 gezeigten identischen Teile mit den gleichen Bezugszeichen versehen. Der Detektor 22 stellt den Beginn der Kreuzung eines Schlitzes 9 mit dem Linearsensor 5 fest und schaltet einen elektronischen Schalter 26 für die Dauer von zwei Kreuzungen zwischen zwei Schlitzen 9 mit dem Linearsensor 5 ein. Der elektronische Schalter 26 betätigt in dieser ersten Abtast-Betriebsart die Steuereinheit 27 der Laser-Lichtquelle 1 und bewirkt, dass während den gesagten beiden Kreuzungen, während der Zeit t1 und t2 ein kohärentes Lichtbündel 2 mit der Intensität L1 resp. L2 ausgestrahlt wird. Die während diesen beiden Kreuzungen in der Schaltanordnung 15 gebildeten Summenströme sind der mit Speicherfunktion ausgerüsteten Korrelator-Schaltanordnung 28 zugeführt.

Die Korrelator-Schaltanordnung 28 multipliziert die am gleichen Ort des Linearsensors 5 zweimal gemessenen Summenstromwerte und gibt diese einem Schwellwertdetektor 29 weiter. Der Schwellwertdetektor 29 stellt beim Ueberschreiten des eingestellten Schwellenwertes den Zeitpunkt td fest, schaltet den elektronischen Schalter 26 in die Mess-Betriebsart für eine etwas kürzere Zeit als die Dauer der Schwellwertüberschreitung ist ein und aktiviert die Tastspeichereinheit 17. In der Mess-Betriebsart wird durch die Steuereinheit 27 der Laser-Lichtquelle 1 ein kohärentes Lichtbündel mit der Intensität von L3 für eine kurze Zeit tL gezündet. Während der Zeit der Schwellenüberschreitung ist die Tastspeichereinheit 17 aktiviert und Messimpulse werden erzeugt.

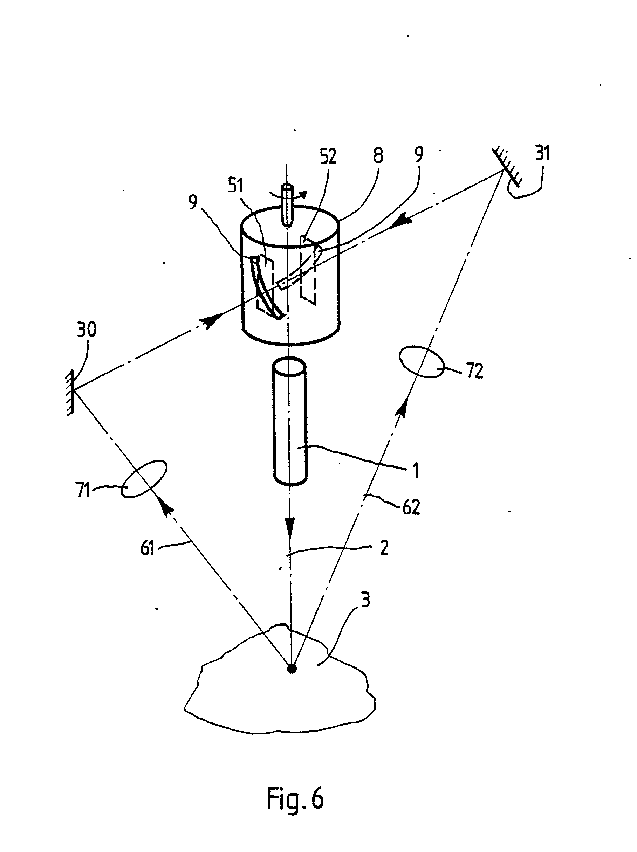

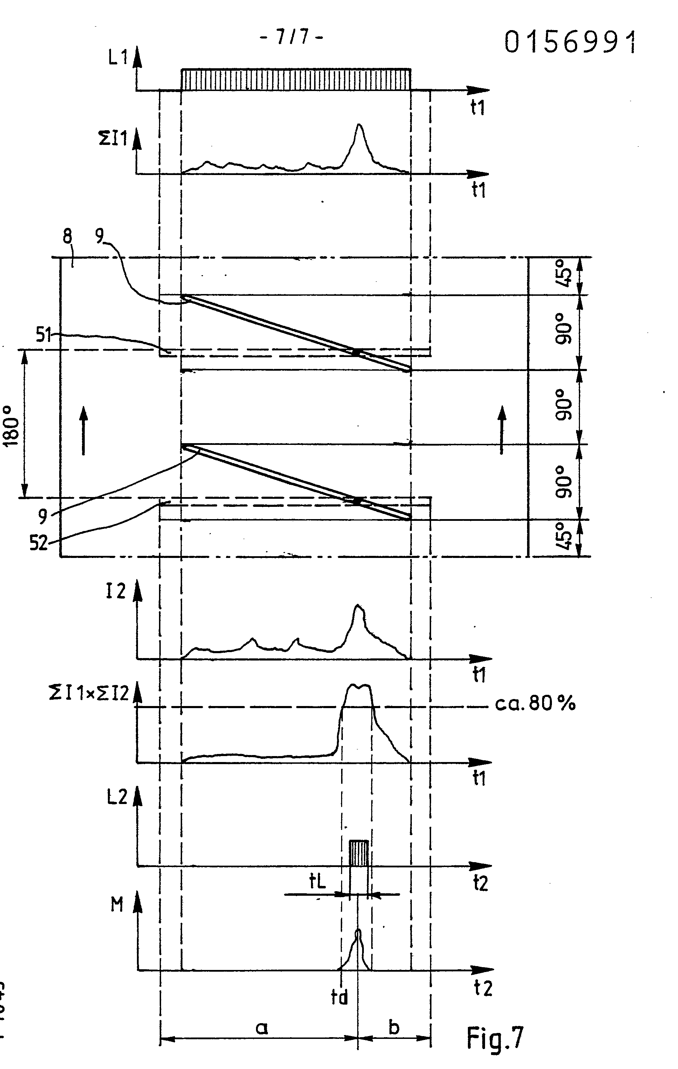

Bei der in Fig.6 dargestellten Anordnung wird das durch den aus der Laser-Lichtquelle 1 senkrecht auf die Oberfläche 3 eines Objektes gerichteten kohärenten Lichtbündel 2 erzeugte Streulicht 61, 62 durch zwei optische Einrichtungen 71, 72 und durch zwei Spiegel 30, 31 auf zwei streifenförmige. Linearsensoren 51, 52 gerichtet. Die Linearsensoren 51, 52 sind in einem mit schräg verlaufenden Schlitzen 9 versehenen, in der Betriebsstellung sich drehenden Hohlzylinder 8 180° versetzt angeordnet. Die Funktionsweise dieser Anordnung ist ähnlich wie anhand der Fig.1 bereits beschrieben worden. Die Auswerteschaltanordnung ist grundsätzlich gleich wie anhand von Fig.5 beschrieben. Zu den beiden Linearsensoren 51, 52 sind je eine differenz- und summenbildende Schaltanordnung 15 und eine Divisionseinheit 16 zugeordnet. In der Tastspeichereinheit 17 wird aus den beiden Messignalen ein Mittelwert gebildet. Der gemeinsamen Korrelator-Schaltanordnung 28 sind die beiden in Fig.7 dargestellten Summenströme aus den beiden differenz- und summenbildenden Schaltanordnungen 15 zugeführt. Die übrigen Schaltungselemente sind gleich ausgebildet und funktionieren gleich wie anhand der Fig.5 beschrieben ist.

Bei dieser Anordnung werden die Streulichter 61 und 62 aus zwei verschiedenen Richtungen empfangen. Durch Korrelation der zur gleichen Zeit auftretenden, zu diesen Streulichtern proportionalen Stromwerte lassen sich die die Messung verfälschenden Störeinflüsse relativ einfach eliminieren. Die Kombination dieses an sich bekannten Systems mit der Benützung der an einer beschriebenen Auswerteschaltanordnung angeschlossenen Linearsensoren 51, 52 und des diese umhüllenden, in der Betriebsstellung sich drehenden, mit Schlitzen 9 versehenen Hohlzylinders 8 erlaubt eine stufenlose Abstandsmessung mit einer hohen Auflösung.

0156991

## Patentansprüche

1. Optisches Messgerät zur berührungslosen Abstandsmessung zwischen dem Messgerät und einem Gegenstand mit einer einen kohärenten Lichtbündel senkrecht auf die Oberfläche des Objektes ausstrahlenden Lichtquelle, mit mindestens einem im Messgerät befestigten, das vom innerhalb des Messbereiches des Messgerätes liegenden Objekt reflektierte Streulicht empfangenden Lichtsensorelement und mit einer am Ausgang des Lichtsensorelementes angeschlossenen elektronischen Auswerteschaltanordnung, wobei die Lage des über eine optische Einrichtung empfangenen Streulichts auf dem Lichtsensorelement das Mass für den zu messenden Abstand bildet, **dadurch gekennzeichnet, dass** das Lichtsensorelement aus einem durch das Streulicht (6) innerhalb des Messbereiches (B) bestreichbaren streifenförmigen Linearsensor (5) besteht, dass ein in der Betriebsstellung sich drehender, mit mindestens einem den streifenförmigen Linearsensor (5) unter einem spitzen Winkel (10) kreuzenden Schlitz (9) versehener Hohlzylinder (8) den Linearsensor (5) umhüllt und dass eine höchstens während der Kreuzung der Schnittstelle zwischen einem Schlitz (9) und der die grösste gemessene, eine bestimmte Grenze überschreitende Lichtintensität aufweisenden Stelle des Linearsensors (5) Messignale erzeugende und während der Kreuzung der übrigen Schnittstellen diese unterdrückende elektronische Auswerteschaltanordnung (12) vorgesehen ist.

2. Optisches Messgerät nach Anspruch 1, **dadurch gekennzeichnet, dass** der streifenförmige Linearsensor (5) parallel zur Achse des Hohlzylinders (8) ausgerichtet ist.

3. Optisches Messgerät nach Anspruch 1 oder 2, **dadurch gekennzeichnet, dass** der Schlitz (9) den streifenförmigen Linearsensor (5) unter 45° kreuzt.

4. Optisches Messgerät nach einem der Ansprüche 1 bis 3, **dadurch gekennzeichnet, dass** vier Schlitze (9) vorgesehen sind.

5. Optisches Messgerät nach einem der Ansprüche 1 bis 4, **dadurch gekennzeichnet, dass** der Hohlzylinder (8) in der Betriebsstellung zwischen 5000 und 25000 Umdrehungen in der Minute aufweist.

P 1045

6. Optisches Messgerät nach einem der Ansprüche 1 bis 5, **dadurch gekennzeichnet, dass** das Verhältnis der durch das Streulicht bestreichbaren Breite des streifenförmigen Linearsensors (5) zur Breite des Schlitzes (9) im Hohlzylinder (8) zwischen 0,1 und 4 liegt.

7. Optisches Messgerät nach einem der Ansprüche 1 bis 6, **dadurch gekennzeichnet, dass** die an den beiden Enden des Linearsensors (5) angeschlossene elektronische Auswerteschaltanordnung (12) eine für die an beiden Enden des Linearsensors (5) austretenden Ströme bestimmte differenz- und summenbildende Schaltanordnung (15), eine nachgeschaltete die Stromdifferenzen durch die Stromsummen dividierende Divisionseinheit (16) und eine Tastspeichereinheit (17) enthält, wobei eine zur Quadrierung der Stromsummen vorgesehene Quadriereinheit (18) einen nachfolgenden die Ueberschreitung einer einer vorgegebenen Grenze der Lichtintensität entsprechenden Stromgrenze feststellenden und während dieser Grenzüberschreitung die Tastspeichereinheit (17) zur Erzeugung von Messignalen aktivierenden Schwellwertdetektor (19) steuert.

8. Optisches Messgerät nach einem der Ansprüche 1 bis 7, **dadurch gekennzeichnet, dass** am Hohlzylinder (8) ein jeweils mindestens den Beginn der Kreuzung des Schlitzes (9) mit dem Linearsensor (5) feststellender Detektor (22) vorgesehen ist.

9. Optisches Messgerät nach Anspruch 1, **dadurch gekennzeichnet, dass** die elektronische Auswerteschaltanordnung einen mindestens zwei Betriebsarten aufweisenden steuerbaren elektronischen Schalter (26) enthält, durch den die Lichtquelle (1) und/oder der Lichtsensor (5) derart ein- und ausschaltbar sind, dass in einer ersten Abtast-Betriebsart die Lichtquelle (1) und der Linearsensor (5) mindestens so lange eingeschaltet bleiben, bis mindestens ein Schlitz (9) den Linearsensor (5) gekreuzt hat und in einer nachfolgenden Mess-Betriebsart die Lichtquelle (1) und der Linearsensor (5) nur an jener Schnittstelle eingeschaltet sind, wo ein Schlitz (9) die Stelle des Linearsensors (5) mit der in der vorangegangenen Abtast-Betriebsart gemessenen grössten relativen Lichtintensität kreuzt, wobei bei der Kreuzung der übrigen Stellen die Lichtquelle (1) und/oder der Linearsensor (5) ausgeschaltet sind.

10. Optisches Messgerät nach den Ansprüchen 8 und 9, **dadurch gekennzeichnet, dass** zur Steuerung der Ein- und Ausschaltung des elektronischen Schalters (26) in der Abtast-Betriebsart eine Verbindung zum Detektor (22) vorhanden ist und in der Mess-Betriebsart dem Linearsensor (5) eine Korrelator-Schaltanordnung (28) und ein Schwellwertdetektor (29) nachgeschaltet sind.

11. Optisches Messgerät mit einem Sensorelement nach Anspruch 10, **dadurch gekennzeichnet, dass** der elektronische Schalter (26) in der Abtast-Betriebsart während mindestens zwei Schlitze (9) den Linearsensor (5) kreuzen, eingeschaltet ist und die Einschaltung des elektronischen Schalters (26) in der nachfolgenden Mess-Betriebsart nur an derjenigen Stelle zwischen einem Schlitz (9) und dem Linearsensor (5) erfolgt, wo in der vorangegangenen Abtast-Betriebsart eine maximale Korrelation zwischen den gemessenen eine bestimmte Grenze überschreitenden Lichtintensitäten aufgetreten war.

12. Optisches Messgerät mit zwei Sensorelementen nach Anspruch 10, **dadurch gekennzeichnet, dass** die beiden Linearsensorelemente (51, 52) im Hohlzylinder (8) 180º versetzt angeordnet sind.

13. Optisches Messgerät nach Anspruch 12, **dadurch gekennzeichnet, dass** die Einschaltung des elektronischen Schalters (26) in der Mess-Betriebsart nur an derjenigen Schnittstelle zwischen einem Schlitz (9) und einem Linearsensor (51, 52) erfolgt, wo in der vorangegangenen Abtast-Betriebsart eine maximale Korrelation zwischen den an den beiden Linearsensoren (51, 52) gemessenen eine bestimmte Grenze überschreitenden Lichtintensitäten aufgetreten war.

Fig.1

P1045

Fig. 2

P 1045

Fig. 3

0156991

- 3/7 -

P1045

0156991

Fig. 4

0156991

Fig.5

P 1045

Fig. 6

Fig.7

## EINSCHLÄGIGE DOKUMENTE

EP 84115823.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB - A - 1 207 976 (GENERAL ELEC-TRIC)<br>* Gesamt *<br>-- | 1,2,3 | G 01 B 11/14 |
| Y | DE - A1 - 2 504 085 (SETIM)<br>* Gesamt *<br>-- | 1,2,3 | |
| A | US - A - 4 041 321 (LINARD)<br>* Gesamt *<br>-- | 1 | |
| A | DE - A - 2 063 619 (KYOWA)<br>* Gesamt *<br>---- | 1 | |

RECHERCHIERTE SACHGEBIETE (Int. Cl.4)

G 01 B 11/00
G 01 D 5/00

Der vorliegende Recherchenbericht wurde für alle Patentansprüche erstellt.

| Recherchenort | Abschlußdatum der Recherche | Prüfer |
|---|---|---|
| WIEN | 25-06-1985 | TOMASELLI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82